# EUROPÄISCHE PATENTSCHRIFT

(11) **EP 1 227 356 B1**
(45) Veröffentlichungstag und Bekanntmachung des Hinweises auf die Patenterteilung: **18.06.2008**
(21) Anmeldenummer: 01128942.8
(22) Anmeldetag: 06.12.2001
(51) Int. Cl.: G02B 21/06

(54) **Sicherheitsvorrichtung für Mikroskope mit einem Laserstrahl als Beleuchtungsquelle**
Safety-device for microscopes with Laser-beam illumination
Dispositif de sécurité pour microscope avec illumination à Laser

(30) Priorität: 25.01.2001 DE 10103256
(43) Veröffentlichungstag der Anmeldung: 31.07.2002
(73) Patentinhaber: Leica Microsystems CMS GmbH, 35578 Wetzlar (DE)
(72) Erfinder: Hay, William C., 64646 Heppenheim (DE); Ulrich, Heinrich, Dr., 69121 Heidelberg (DE)
(74) Vertreter: Reichert, Werner Franz

(56) Entgegenhaltungen:
- WO-A-99/13370
- DE-A- 4 323 129
- PATENT ABSTRACTS OF JAPAN vol. 1998, no. 04, 31. März 1998 (1998-03-31) -& JP 09 318880 A (NIKON CORP), 12. Dezember 1997 (1997-12-12)

## Beschreibung

Die Erfindung betrifft ein Mikroskop mit mindestens einer Beleuchtungsquelle zum Aussenden einer elektromagnetischen Strahlung einem Objektivhalter zum Halten eines Elements.

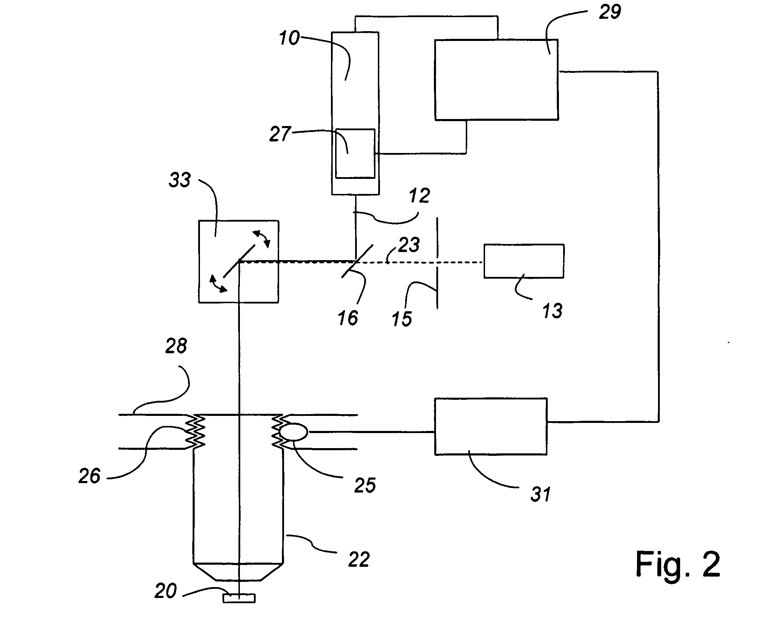

In der Scan-Mikroskopie wird eine Probe mit einem Lichtstrahl beleuchtet, um das von der Probe emittierte Reflexions- oder Fluoreszenzlicht zu beobachten, wobei zur Beleuchtung üblicherweise Laserstrahlen eingesetzt werden. Der prinzipielle Aufbau eines Scan-Mikroskops ist in dem Lehrbuch von James B. Pawley, "Handbook of Biological Confocal Microscopy", 1990, 1989 Plenum Press, New York, beschrieben. Auf den Seiten 4 bis 7 ist z.B. das Prinzip der konfokalen Mikroskopie beschrieben (siehe Fig.2 im Pawley). Dabei wird eine Probe mittels eines fein fokussierten Lichtstrahls abgetastet. Das von der Probe ausgesendete Licht gelangt über einen Strahlteiler auf einen Detektor, der ein Eintrittspinhole aufweist.

Speziell in der konfokalen Scan-Mikroskopie wird eine Probe mit dem Fokus eines Lichtstrahles in drei Dimensionen abgetastet. Ein konfokales Rastermikroskop umfasst im Allgemeinen eine Lichtquelle, eine Fokussieroptik, mit der das Licht der Quelle auf eine Lochblende - die sogenannte Anregungsblende - fokussiert wird, einen Strahlteiler, eine Scanvorrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Hauptstrahlteiler eingekoppelt. Das von der Probe kommende Fluoreszenz- oder Reflexionslicht gelangt über dieselben Scanspiegel zurück zum Hauptstrahlteiler, passiert diesen, um anschließend auf die Detektionsblende fokussiert zu werden, hinter der sich die Detektoren, meist Photomultiplier, befinden. Detektionslicht, das nicht direkt aus der Fokusregion stammt, nimmt einen anderen Lichtweg und passiert die Detektionsblende nicht, sodass man eine Punktinformation erhält, die durch sequentielles Abtasten der Probe zu einem dreidimensionalen Bild führt. Meist wird ein dreidimensionales Bild durch schichtweise Bilddatennahme erzielt.

Laser werden in der Mikroskopie oft zur Manipulation kleiner Probenbereiche verwendet. Beispielsweise können Probenbereiche ausgeschnitten oder verschoben oder Probenbestandteile sortiert oder aussortiert werden. Ein solches Verfahren ist unter anderem aus der EP 0 879 408 B1 bekannt.

Wie aus der DE 32 02 461 C1 bekannt ist, werden bei optischen Mikroskopen Objektive verwendet, die in einem Objektivhalter untergebracht sind. Dabei werden üblicherweise sogenannte Revolver eingesetzt, bei denen eine Mehrzahl von Objektivhaltepositionen vorgesehen sind, in die jeweils ein Objektiv eingesetzt werden kann. Durch Drehen des Revolvers kann jeweils eine andere Objektivhalteposition mit einem anderen Objektiv in den Strahlengang bewegt werden. Mit Hilfe einer Bajonettbefestigung und eines Zentrierkegels ist es möglich, ein Objektiv in jede der Objektivhaltepositionen definiert einzusetzen. Durch das nun mögliche positionsgenaue Einsetzen der Objektive, können am Objektiv vorgesehene technische Daten abgegriffen werden. Diese können von einer am Mikroskop befestigten Leseeinrichtung erfasst und zur Steuerung von Gerätefunktionen wie Blenden, Anzeigevorrichtungen und so weiter verwendet werden.

Mit den bei Mikroskopen bzw. bei Scan-Mikroskopen üblicherweise als Beleuchtungsquellen eingesetzten Lasern kann die Probe zur Erzielung des gewünschten Ergebnisses optimal beleuchtet bzw. manipuliert werden. Die dabei verwendeten Laser können für den Benutzer des Mikroskops, also das Bedienpersonal, jedoch dann eine Gefahr darstellen, wenn die erforderlichen Sicherheitsbestimmungen nicht eingehalten werden. Diese Bestimmungen sollen insbesondere verhindern, dass Laserlicht unkontrolliert in das Auge des Bedienpersonals fällt, womit eine Gefährdung der Gesundheit, insbesondere des Augenlichtes verbunden ist. In der US 5,850,038 wurde daher bereits ein Scan-Mikroskop vorgeschlagen, das mit einem zusätzlichen Beobachtungsokular zur Beobachtung des Probenauflagetisches versehen ist. Um zu verhindern, dass Laserlicht in das Beobachtungsokular eintritt, während der Benutzer das Okular benutzt, ist eine Verschlusseinrichtung vorgesehen, die bei Verwendung des Okulars geöffnet werden muss und deren Offen- bzw. Geschlossenstellung erfasst und an einen Mikrocomputer weitergegeben wird. Der Mikrocomputer wiederum steht mit einer Einheit in Verbindung, die jedesmal dann, wenn die Okularöffnung geöffnet ist, die Laserquelle abschaltet und die Laserquelle anschaltet, wenn die Okularöffnung geschlossen ist. Damit ist sichergestellt, dass bei Benutzung des Okulars durch den Anwender des Mikroskops kein Laserlicht in das Okular gelangen kann. Diese Einrichtung hat jedoch den Nachteil, dass bei Beobachtung des Probentellers ohne das Okular dennoch Laserlicht in das Auge des Benutzers insbesondere dann gelangen kann, wenn Streulicht z. B. durch ein nicht eingesetztes Objektiv entsteht.

Aufgabe der vorliegenden Erfindung ist es daher, die mit dem Betrieb eines Mikroskops verbundenen Gefahren weiter zu verringern.

Erfindungsgemäß wird diese Aufgabe durch ein Scan-Mikroskop mit den Merkmalen gemäß Anspruch 1 gelöst.

Grundsätzlich wird das erfindungsgemäße Ziel dadurch erreicht, dass eine Erkennungseinrichtung vorgesehen wird, die in der Lage ist zu erfassen, ob in eine Objektivhalterung ein Element, insbesondere ein Objektiv oder ein sogenanntes Blindelement eingesetzt ist oder nicht. Die Erkennungseinrichtung steht mit einer Sperreinrichtung mittelbar oder unmittelbar in Verbindung, wobei die Sperreinrichtung die Laserstrahlung dann unterbricht, wenn die Erkennungseinrichtung erfasst, dass kein Element in der Objektivhalterung eingesetzt ist. Bei dem in die Objektivhalterung eingebrachten Element kann es sich um ein Objektiv oder ein sogenanntes Blindelement (Dummy) handeln, wobei das Blindelement den Objektivhalter für den Fall verschließt, dass kein Objektiv eingesetzt werden soll. Die beschriebene Kombination von Erkennungseinrichtung und Sperreinrichtung kann in Scan-Mikroskopen als Sicherheitsvorrichtung eingesetzt werden, wobei sich für den Benutzer des Mikroskops der besondere Vorteil ergibt, dass das Scan-Mikroskop in jedem Fall dann abgeschaltet ist, wenn in einer Objektivhalterung kein Element eingesetzt ist. Damit ist auch die Gefahr ausgeschlossen, dass durch das Fehlen eines Elements in einer Objektivhalterung Streulicht entstehen könnte, das zur Schädigung des Auges des Benutzers führen könnte.

In einer besonders bevorzugten Ausführungsform der Erfindung ist das Mikroskop mit einem Revolver ausgestattet, der eine Mehrzahl von Objektivhaltepositionen aufweist, in die jeweils ein Objektiv eingesetzt werden kann. Beim Betrieb des Mikroskops muss gemäß den Sicherheitsbestimmungen in jedes der Objektivhaltepositionen ein Objektiv oder ein Blindelement eingesetzt sein. Die erfindungsgemäße Kombination aus Erkennungseinrichtung und Sperreinrichtung ist bei dieser Ausführungsform bevorzugt so ausgeführt, dass für jedes der Objektivhaltepositionen eine Erkennungseinrichtung vorgesehen ist und die Sperreinrichtung den Laserstrahl schon dann unterbricht, wenn in wenigstens einer der Objektivhaltepositionen kein Element eingesetzt ist.

Alternativ hierzu kann die Kombination aus Erkennungseinrichtung und Sperreinrichtung so ausgeführt sein, dass die Unterbrechung des Laserstrahls nur dann erfolgt, wenn eine Objektivhalteposition des Revolvers in den Strahlengang gedreht wird, in die kein Element eingesetzt ist. Diese Ausführungsform hat den Vorteil, dass das Mikroskop auch dann betrieben werden kann, wenn nicht alle Objektivhaltepositionen mit einem Element besetzt sind, wobei die Sicherheit des Benutzers dennoch gewährleistet ist, da der Laserstrahl jedenfalls dann unterbrochen wird, wenn der Strahl frei durch eine Objektivhalteposition hindurchtreten sollte.

Weitere Vorteile und vorteilhafte Ausführungsformen der Erfindung ergeben sich aus den nachfolgenden Figuren sowie deren Beschreibung, wobei bei der Darstellung der Figuren zu Gunsten der Übersichtlichkeit auf eine maßstabsgetreue Wiedergabe verzichtet wurde.

Es zeigen im Einzelnen:
- Fig. 1.: den prinzipiellen Aufbau eines Scan-Mikroskops
- Fig. 2: einen schematischen Aufbau eines Scan-Mikroskops mit einer erfindungsgemäßen Erkennungs- und Sperreinrichtung,
- Fig. 3: einen Ausschnitt aus einem schematischen Aufbau eines Scan-Mikroskops mit einer erfindungsgemäßen Erkennungseinrichtung
- Fig. 4: eine schematische Darstellung eines Revolvers eines Scan-Mikroskops in Aufsicht

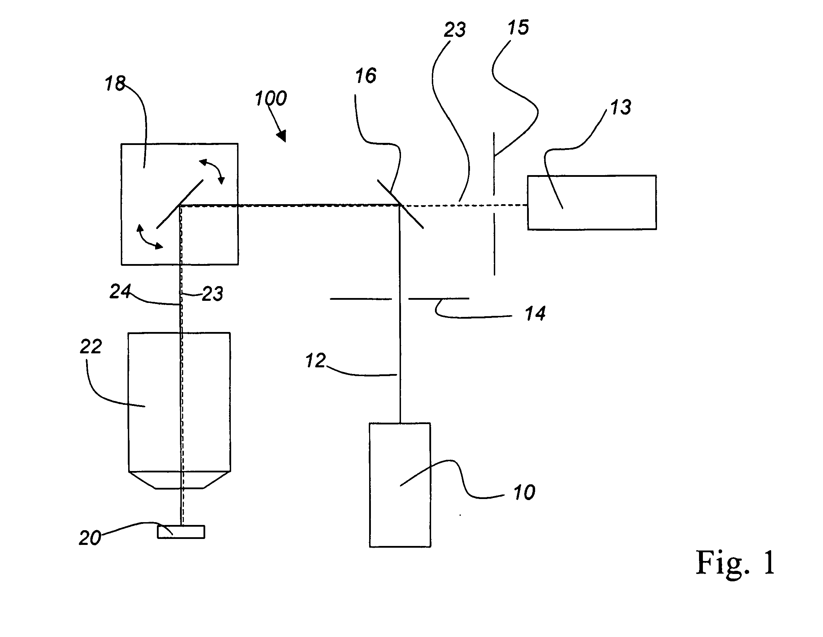

Fig. 1 zeigt den prinzipiellen Aufbau eines Scan-Mikroskops. Dieser Aufbau besteht im Wesentlichen aus einer Lichtquelle 10 die einen Beleuchtungslichtstrahl 12 erzeugt. Über eine Beleuchtungsblende 14 gelangt der Beleuchtungslichtstrahl 12 auf einen Hauptstrahlteiler 16. Vom Hauptstrahlteiler 16 gelangt das Licht der Lichtquelle 10 auf einen Scanner 18. Der Scanner 18 ist derart ausgestaltet, dass damit eine zu untersuchende Probe 20 auf eine gewünschte Weise durch einen Abtastlichtstrahl 24 abgetastet wird. Der Abtastlichtstrahl 24 gelangt über ein Objektiv 22 zu der zu untersuchenden Probe 20. In gleicher Weise wird ein von der Probe 20 zurückgesendeter Detektionslichtstrahl 23 durch das Objektiv 22 auf den Scanner 18 abgebildet. Vom Scanner 18 ausgehend tritt der Detektionslichtstrahl 23 durch den Hauptstrahlteiler 16. Vor einem im nach dem Hauptstrahlteiler 16 im Detektionslichtstrahl 23 angeordneten Detektor 13 ist eine Detektionsblende 15 vorgesehen.

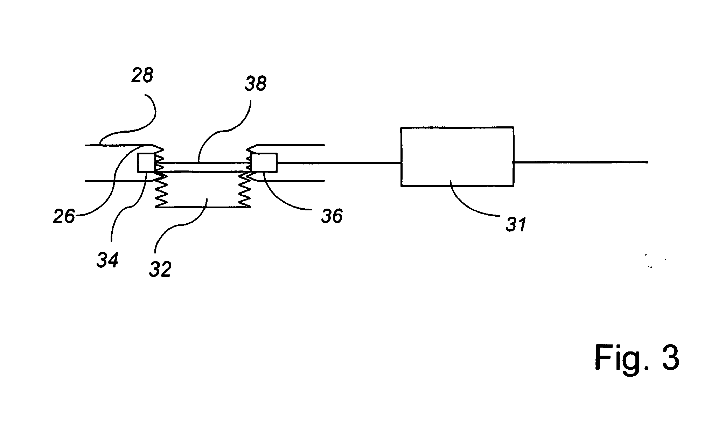

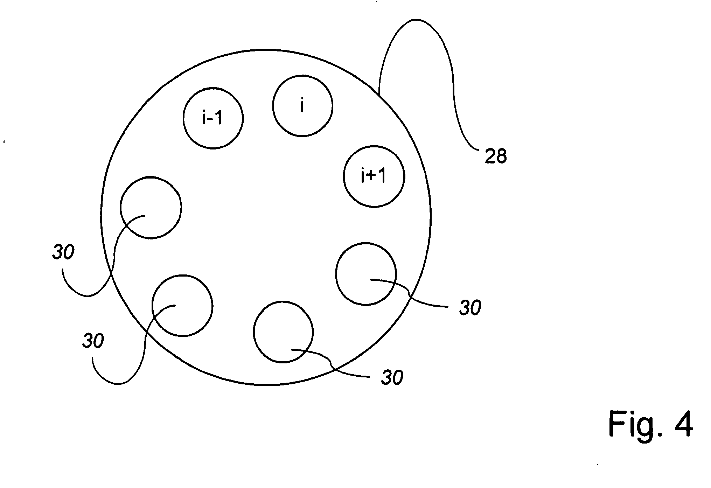

Wie in Fig. 2 gezeigt, wird das Objektiv 22 in einen Objektivhalter 26 eingebracht, beispielsweise eingeschraubt oder mit Hilfe eines Bajonettverschlusses befestigt. Üblicherweise ist dabei ein sogenannter Revolver 28 vorgesehen, der eine Mehrzahl von Objektivhaltepositionen 30 (Fig. 4) mit jeweils einem Objektivhalter 26 aufweist. Um nun zu gewährleisten, dass während des Betriebes des Mikroskops nur dann ein Beleuchtungslichtstrahl 12 ausgesendet wird, wenn ein Objektiv 22 oder ein Blindelement 32 (Fig. 3) in den Objektivhalter 26 eingesetzt ist, wird mit einer Erkennungseinrichtung 25 überprüft, ob in den Objektivhalter 26 ein Objektiv 22 oder ein Blindelement 32 (Fig. 3), eingesetzt ist. Sofern eine Objektivhalteposition 30 nicht benutzt werden soll, muss diese während des Betriebes des Mikroskops mit einem sogenannten Blindelement verschlossen werden, sodass die Erkennungseinrichtung 25 auch in der Lage ist, zu erkennen, ob ein Blindelement in den Objektivhalter 26 eingesetzt ist. Die Erkennungseinrichtung 25 ist im vorliegenden Fall als Mikroschalter ausgeführt. Beim Einsetzen, insbesondere Einschrauben eines Objektives 22 in den Objektivhalter wird der Mikroschalter 25 betätigt, wodurch z. B. ein elektrischer Kontakt geschlossen und in der Folge ein Stromkreis geschlossen oder unterbrochen wird. Die Betätigung des Mikroschalters 25 erzeugt also ein Signal, das als Indikator dafür dient, dass ein Objektiv 22 in den Objektivhalter 26 eingesetzt ist. Dieses Signal wird an eine Sperreinrichtung 27 weitergegeben. Die Sperreinrichtung 27 ist dabei so ausgeführt, dass sie dafür sorgt, dass eine Beleuchtung unterbrochen, d. h. ein Beleuchtungslichtstrahl 12 unterbrochen oder gar nicht erzeugt wird, wenn von der Erkennungseinrichtung 25 erkannt wird, dass kein Element in den Objektivhalter 26 eingesetzt ist.

Gemäß der in Fig. 2 gezeigten Ausführungsform ist die Erkennungseinrichtung 25 über einen sogenannten Interlock 31 mit dem Netzteil 29 des Lasers 10 verbunden. Das Netzteil 29 wiederum steht mit der Sperreinrichtung 27, beispielsweise einem Shutter, in Verbindung, wobei der Shutter immer dann geschlossen wird, wenn von der Erkennungseinrichtung 25 kein Element im Objektivhalter 26 detektiert wird. Dadurch wird verhindert, dass in diesem Zustand aus dem Laser 10 ein Beleuchtungslichtstrahl 12 austreten kann. Der Shutter kann beispielsweise als Fahne ausgeführt sein, die sich in den Strahlengang innerhalb oder außerhalb des Resonators des Lasers 10 absenkt, wenn der Laserstrahl unterbrochen werden soll.

Neben dem Einsatz von Mikroschaltern als Erkennungseinrichtungen 25 ist es selbstverständlich auch möglich, andere geeignete Elemente als Erkennungseinrichtungen zu verwenden. Dabei kommen insbesondere andere mechanische oder magnetische Kontaktelemente wie etwa magnetische Näherungsschalter in Betracht, mit denen das Einsetzen eines Objektivs 22 im Objektivhalter 26 detektiert werden kann. In gleicher Weise kann auch erkannt werden, ob ein in Fig. 3 gezeigtes Blindelement 32 in den Objektivhalter 26 eingesetzt ist.

Wie in Fig. 3 gezeigt kann als Erkennungseinrichtung darüber hinaus ein elektromagnetische Sende- und Empfangssystem, insbesondere in optisches Lichtschrankensystem verwendet werden. Dabei wird in den Objektivhalter 26 eine Lichtquelle, beispielsweise eine Fotodiode 34 verwendet, die einen Lichtstrahl 38 aussendet. Dieser Lichtstrahl 38 kann von einem gegenüberliegenden Lichtdetektor 36 erfasst werden. Sofern der Lichtdetektor 36 den Lichtstrahl 38 erfasst, ist kein Blindelement 32 in den Objektivhalter 26 eingesetzt. In diesem Fall wird ein Signal z. B. wiederum über den Interlock 31 an die Sperreinrichtung 27 weitergegeben, um die Probenbestrahlung zu unterbrechen. Erst wenn der Lichtdetektor 34 keinen Lichtstrahl 38 mehr detektiert, wird an die Sperreinrichtung 27 das Signal zur Freigabe der Probenbeleuchtung weitergeleitet.

Es ist klar, dass auch die elektromagnetische Lichtschranke mit der Lichtquelle 34 und dem Lichtdetektor 36 zusammen mit dem Objektiv 22 oder dem Blindelement 32 auch so ausgeführt sein können, dass der Lichtstrahl 38 von der Lichtquelle 34 nur dann zum Lichtdetektor 36 gelangt, wenn das Objektiv 22 oder das Blindelement 32 eingesetzt sind. Hierzu sind die verwendeten Objektive 22 und Blindelemente 32 mit entsprechenden Lichtleitern oder Durchbrüchen zu versehen. Insbesondere die zuletzt beschriebenen Ausführungsform hat den weiteren Vorteil, dass damit auch festgestellt werden kann, ob ein Element in den Objektivhalter 26 positionsgenau und richtig eingesetzt worden ist.

Die in Fig. 2 gezeigte Sperreinrichtung 27 ist als Verschlusselement (Shutter) innerhalb des Lasers 10 ausgeführt und blendet den Laserstrahl immer dann aus, wenn kein Element in den Objektivhalter eingesetzt ist.

Selbstverständlich ist es auch möglich, andere Sperreinrichtungen vorzusehen, mit deren Hilfe verhindert wird, dass ein Beleuchtungslichtstrahl 12 in Richtung der Probe 20 gelenkt wird. Neben dem Ausblenden eines Strahles innerhalb oder außerhalb des Lasers 10 kann selbstverständlich auch der Laser an sich abgeschaltet werden, wobei beispielsweise das Netzteil 29 abgeschaltet wird, sodass kein Laserstrahl entsteht.

In Fig. 4 ist schematisch ein Revolver 28 mit einer Vielzahl von Objektivhaltepositionen 30 gezeigt, wobei jede der Objektivhaltepositionen 30 einen Objektivhalter aufweist, in die ein Objektiv 22 oder ein Blindelement 32 einzusetzen ist, wenn das Mikroskop betrieben werden soll. In einer weiteren Ausführungsform der Erfindung kann die Erkennungseinrichtung dabei so vorgesehen sein, dass jede der vorhandenen Objektivhaltepositionen 30 daraufhin überwacht wird, ob ein Element eingesetzt ist oder nicht. Sofern auch nur in einer der Objektivhaltepositionen 30 kein Element eingesetzt ist, wird von der Erkennungseinrichtung ein Signal an die Sperreinrichtung 27 weitergegeben, die dann das Unterbrechen des Laserstrahles 12 veranlasst.

Entsprechend einer weiteren Ausführungsform der Erfindung wird in dem Revolver 28 nur eine einzige Objektivhalteposition i beobachtet. Dabei befindet sich die Objektivhalteposition i im Strahlengang des Abtastlichtstrahles 24, der hier senkrecht zur Papierebene durch die Position i verläuft. Damit ist wiederum gewährleistet, dass das Mikroskop nur dann betrieben werden kann, wenn im Strahlengang des Abtastlichtstrahles 24 ein Element, d. h. also ein Objektiv 22 oder ein Blindelement 32 eingesetzt ist. Diese Ausführungsform der Erfindung lässt sich auf zwei unterschiedliche Arten verwirklichen. Zum einen kann in jedem Objektivhalter 26 (Fig. 2) der Objektivhaltepositionen 30 eine Erkennungseinrichtung 36, 25 vorgesehen werden, die jedoch nur dann aktiviert wird, wenn die jeweilige Objektivhalteposition 30 in die Position i gedreht wird. Hierzu können beispielsweise externe Kontaktelemente vorgesehen werden, die beim Eindrehen einer Objektivhalteposition 30 in die Position i die Erkennungseinrichtung aktivieren. Zum Anderen kann diese Ausführungsform der Erfindung auch dadurch verwirklicht werden, dass die Erkennungseinrichtung 36, 25 extern, d.h. also außerhalb des Revolvers 28 vorgesehen ist. Eine einfache Möglichkeit, die Erkennungseinrichtung 25 derartig auszuführen besteht beispielsweise darin, die Erkennungseinrichtung als Lichtschranke auszuführen, die dann jedoch außerhalb des Revolvers 28 angebracht ist und die Objektivhalteposition i durchstrahlt. Sofern die Lichtschranke beim Eindrehen einer Objekthalteposition 30 von der Position i-1 in die Position i unterbrochen wird, erzeugt die Erkennungseinrichtung ein Signal, welches anzeigt, dass ein Element in den Objektivhalter eingesetzt ist. Bleibt die Lichtschranke nach dem Eindrehen der Objektivhalteposition 30 in die Stellung i nicht unterbrochen, so ist kein Element in den Objektivhalter 26 eingesetzt und der Probenbeleuchtungsstrahl 12 wird entsprechend unterbrochen.

Obwohl die Erfindung im Bezug auf einige besondere Ausführungsformen beschrieben wurde, ist es selbstverständlich, dass Änderungen und Abwandlungen durchgeführt werden können, ohne dabei den Schutzbereich der nachstehenden Ansprüche zu verlassen.

### Bezugszeichenliste

- 10: Lichtquelle
- 12: Beleuchtungslichtstrahl
- 13: Detektor
- 14: Beleuchtungsblende
- 15: Detektionsblende
- 16: Hauptstrahlteiler
- 18: Scanner
- 20: Probe
- 22: Objektiv
- 23: Detektionslichtstrahl
- 24: Abtastlichtstrahl
- 25: Erkennungseinrichtung
- 26: Objektivhalter
- 27: Sperreinrichtung
- 28: Revolver
- 29: Netzteil
- 30: Objektivhalteposition
- 31: Interlock
- 32: Blindelement
- 34: Lichtquelle (Lichtdiode)
- 36: Lichtdetektor
- 38: Lichtstrahl
- i: Objektivhalteposition im Strahlengang
- 100: Scan-Mikroskop

## Patentansprüche

1. Mikroskop mit mindestens einer Beleuchtungsquelle (10), zum Aussenden einer elektromagnetischen Strahlung (12), einem Objektivhalter (26) zum Halten eines Elements, **dadurch gekennzeichnet, dass** eine Erkennungseinrichtung (25, 34, 36) zum Erkennen, ob ein Element im Objektivhalter (26) eingesetzt ist, vorgesehen ist, die mit einer Sperreinrichtung (27) zum Unterbrechen der elektromagnetischen Strahlung (12) gekoppelt ist.

2. Mikroskop nach Anspruch 1, **dadurch gekennzeichnet, dass** die Sperreinrichtung (27) so ausgeführt ist, dass sie die Beleuchtungsquelle (10) abschalten kann.

3. Mikroskop nach Anspruch 1, **dadurch gekennzeichnet, dass** die Sperreinrichtung (27) so ausgeführt ist, dass sie ein Ausblenden des von der Beleuchtungsquelle (10) ausgehenden Strahles (12) bewirken kann.

4. Mikroskop nach einem der Ansprüche 1 bis 3 , **dadurch gekennzeichnet, dass** die Erkennungseinrichtung (34, 36) als eine mechanische, optische, magnetische oder elektrische Sperre ausgeführt ist.

5. Mikroskop nach einem der Ansprüche 1 bis 4, **dadurch gekennzeichnet, dass** die Erkennungseinrichtung (34, 36) so ausgeführt ist, dass sie unterbrochen wird, wenn ein Element (22, 32) eingesetzt ist.

6. Mikroskop nach einem der Ansprüche 1 bis 4, **dadurch gekennzeichnet, dass** die Erkennungseinrichtung (25) so ausgeführt ist, dass sie geschlossen wird, wenn ein Element (22, 32) eingesetzt ist

7. Mikroskop nach einem der Ansprüche 1 bis 6, **dadurch gekennzeichnet, dass** der Objektivhalter (26) als Revolver (28) mit mehreren Objektivhaltepositionen (30) ausgeführt ist.

8. Mikroskop nach Anspruch 7, **dadurch gekennzeichnet, dass** die elektromagnetische Strahlung (12) dann unterbrochen wird, wenn wenigstens eine der Objektivhaltepositionen (30) kein Element aufweist.

9. Mikroskop nach Anspruch 7, **dadurch gekennzeichnet, dass** die elektromagnetische Strahlung (12) dann unterbrochen wird, wenn die im Strahlengang des Detektionsstrahles (24) befindliche Objektivhalteposition (i) kein Element aufweist.

10. Mikroskop nach einem der Ansprüche 1 bis 9, **dadurch gekennzeichnet, dass** das Element ein Objektiv (22) oder ein Blindelement (32) ist.

11. Mikroskop nach Anspruch 1, **dadurch gekennzeichnet, dass** eine Vorrichtung zur Lasermikrodissektion vorgesehen ist.

12. Mikroskop nach einem der Ansprüche 1 bis 11, **dadurch gekennzeichnet, dass** das Mikroskop ein Scan-Mikroskop (100) ist.

## Claims

1. Microscope having at least one illumination source (10) for emitting an electromagnetic radiation (12), and an objective holder (26) for holding an element, **characterized in that** a detecting device (25, 34, 36) which is coupled to a blocking device (27) for interrupting the electromagnetic radiation (12) is provided for detecting whether an element is inserted in the objective holder (26).

2. Microscope according to Claim 1, **characterized in that** the blocking device (27) is designed such that it can switch off the illumination source (10).

3. Microscope according to Claim 1, **characterized in that** the blocking device (27) is designed such that it can mask out the beam (12) emanating from the illumination source (10).

4. Microscope according to one of Claims 1 to 3, **characterized in that** the detecting device (34, 36) is designed as a mechanical, optical, magnetic or electrical block.

5. Microscope according to one of Claims 1 to 4, **characterized in that** detecting device (34, 36) is designed such that it is interrupted when an element (22, 32) is inserted.

6. Microscope according to one of Claims 1 to 4, **characterized in that** the detecting device (25) is designed such that it is closed when an element (22, 32) is inserted.

7. Microscope according to one of Claims 1 to 6, **characterized in that** the objective holder (26) is designed as revolver (28) with a number of objective holding positions (30).

8. Microscope according to Claim 7, **characterized in that** the electromagnetic radiation (12) is interrupted whenever at least one of the objective holding positions (30) has no element.

9. Microscope according to Claim 7, **characterized in that** the electromagnetic radiation (12) is interrupted whenever the objective holding position (i) located in the beam path of the detection beam (24) has no element.

10. Microscope according to one of Claims 1 to 9, **characterized in that** the element is an objective (22) or a blind element (32).

11. Microscope according to Claim 1, **characterized in that** a device for laser microdissection is provided.

12. Microscope according to one of Claims 1 to 11, **characterized in that** the microscope is a scanning microscope (100).

## Revendications

1. Microscope qui présente au moins une source d'éclairage (10) qui émet un rayonnement électromagnétique (12), un porte-objectif (26) qui maintient un élément, **caractérisé en ce qu'**un dispositif de détection (25, 34, 36) qui est accouplé à un dispositif de blocage (27) qui interrompt le rayonnement électromagnétique (12) est prévu pour détecter si un élément a été inséré dans le porte-objectif (26).

2. Microscope selon la revendication 1, **caractérisé en ce que** le dispositif de blocage (27) est réalisé de manière à pouvoir débrancher la source d'éclairage (10).

3. Microscope selon la revendication 1, **caractérisé en ce que** le dispositif de blocage (27) est réalisé de manière à pouvoir faire écran au faisceau (12) émis par la source d'éclairage (10).

4. Microscope selon l'une des revendications 1 à 3, **caractérisé en ce que** le dispositif de détection (34, 36) est réalisé sous la forme d'un blocage mécanique, optique, magnétique ou électrique.

5. Microscope selon l'une des revendications 1 à 4, **caractérisé en ce que** le dispositif de détection (34, 36) est réalisé de manière à être interrompu lorsqu'un élément (22, 32) a été inséré.

6. Microscope selon l'une des revendications 1 à 4, **caractérisé en ce que** le dispositif de détection (25) est réalisé de manière à être fermé lorsqu'un élément (22, 32) a été inséré.

7. Microscope selon l'une des revendications 1 à 6, **caractérisé en ce que** le porte-objectif (26) est réalisé sous la forme d'une tourelle (28) qui présente plusieurs positions (30) de maintien d'objectif.

8. Microscope selon la revendication 7, **caractérisé en ce que** le rayonnement électromagnétique (12) est interrompu lorsqu'au moins l'une des positions (30) de maintien d'objectif ne présente aucun élément.

9. Microscope selon la revendication 7, **caractérisé en ce que** le rayonnement électromagnétique (12) est interrompu lorsque la position (i) de maintien d'objectif située dans le parcours du rayon de détection (24) ne présente pas d'élément.

10. Microscope selon l'une des revendications 1 à 9, **caractérisé en ce que** l'élément est un objectif (22) ou un élément aveugle (32).

11. Microscope selon la revendication 1, **caractérisé en ce qu'**il présente un dispositif de microdissection par laser.

12. Microscope selon l'une des revendications 1 à 11, **caractérisé en ce que** le microscope est un microscope (100) à balayage.
